# EUROPÄISCHE PATENTANMELDUNG

(11) **EP 3 275 524 A1**
(43) Veröffentlichungstag der Anmeldung: **31.01.2018**
(21) Anmeldenummer: 16181943.8
(22) Anmeldetag: 29.07.2016
(51) Int. Cl.: B01D 19/00, G01N 29/02

(54) **UNTERDRUCK-ENTGASUNGSVORRICHTUNG FÜR EINE FLÜSSIGKEIT SOWIE VERFAHREN ZU DEREN BETRIEB**

(71) Anmelder: Siemens Aktiengesellschaft, 80333 München (DE)
(72) Erfinder: Brandt, Torsten, 91301 Forchheim (DE); Braunecker, Michael, 90491 Nürnberg (DE); Mattejat, Arno, 91056 Erlangen (DE)

(57) **Zusammenfassung**

Eine Unterdruck-Entgasungsvorrichtung (13) für eine Flüssigkeit, mit einem Unterdruck-Entgasungsraum (26) und einer Unterdruckerzeugungseinrichtung (30) zur Erzeugung eines Druckes unterhalb eines Betriebsdruckes der zu entgasenden Flüssigkeit, insbesondere eines Vakuums, in dem Entgasungsraum (26) weist erfindungsgemäß einen in dem Unterdruck-Entgasungsraum (26) angeordneten Sensor (33) zur Detektion eines Gasblasenanteils in der zu entgasenden Flüssigkeit auf.

Die Erfindung nutzt in intelligenter Weise den Entgasungsvorgang in einer Unterdruck-Entgasungsvorrichtung (13), um durch einen darin integrierten Sensor (33) den Gasgehalt bzw. Gas-Sättigungszustand einer Flüssigkeit zu überwachen und/oder zu ermitteln. Hierdurch ergibt sich ein wesentlich reduzierter Apparate- und Kostenaufwand sowie Platzbedarf im Vergleich zu einer von der Entgasungsvorrichtung getrennten Überwachungs- und/oder Messeinrichtung für den Gasgehalt.

## Beschreibung

Die Erfindung betrifft eine Unterdruck-Entgasungsvorrichtung für eine Flüssigkeit gemäß Patentanspruch 1 sowie ein Verfahren zu deren Betrieb gemäß Patentanspruch 7 bzw. 13. Die Erfindung betrifft ferner eine Verwendung einer derartigen Vorrichtung oder eines derartigen Verfahrens gemäß Patentanspruch 16.

In vielen technischen Bereichen ist eine Überwachung und falls notwendig Reduzierung des Gasgehalts in Betriebsflüssigkeiten notwendig, da das Vorliegen von Gas die Eigenschaften dieser Flüssigkeiten beeinflusst. Insbesondere gilt dies für Heiz- oder Kühlflüssigkeiten oder Schmiermittelflüssigkeiten. Beispielsweise ist dies von Bedeutung für den störungsfreien Betrieb einer elektrochemischen Zelle, wie z.B. einer Brennstoffzelle.

Im Betrieb einer Brennstoffzelle muss die entstehende Verlustwärme aus dem aktiven Bereich der Brennstoffzelle weitgehend entfernt werden, um lokale Überhitzungen (sogenannte "hot Spots") zu vermeiden. Dies erfolgt am effektivsten durch ein flüssiges Kühlmittel, das die Brennstoffzelle durchströmt. In einem Brennstoffzellenstapel mit Brennstoffzellen basierend auf der Polymer-Elektrolyt-Membran (PEM)-Technologie befinden sich die Elektroden an der einer Elektrolyt-Membran abgewandten Seite im Kontakt mit jeweils einer sogenannten Bipolarplatte. Die Bipolarplatte hat die Aufgabe, die einzelnen Brennstoffzellen (medienseitig) zu trennen, für Stromfluss im Zellenstapel zu sorgen und die Reaktionswärme zu entfernen.

Neben der Stromleitung und der Führung der Reaktanten Wasserstoff und Sauerstoff, können die Bipolarplatten auch eine Kühlfunktion erfüllen, indem eine Kühlflüssigkeit, insbesondere Wasser, durch diese geleitet wird. Wegen seiner hohen spezifischen Wärmekapazität, der geringen elektrischen Leitfähigkeit, der guten Medienverträglichkeit und der niedrigen Betriebskosten kommt bei PEM-Brennstoffzellen hauptsächlich deionisiertes Wasser (Deionat) als Kühlflüssigkeit zum Einsatz. Die Kühlflüssigkeit darf nur eine sehr geringe Leitfähigkeit haben und sollte möglichst gasfrei sein, damit sich keine Gasblasen an der Oberfläche der Bipolarplatten festsetzen, da Bereiche mit Gasblasen schlechter gekühlt werden und daher lokal überhitzt werden können. Aufgrund physikalischer und konstruktiver Vorgaben ist jedoch nicht auszuschließen, dass auch ursprünglich gasfreies Kühlwasser bei seinem Einsatz Gas aufnimmt und mit Blasen versehen ist.

Beispielsweise können durch geringe Leckagen in den Brennstoffzellen die Reaktanten Wasserstoff oder Sauerstoff in die Kühlflüssigkeit gelangen. Außerdem sind in Brennstoffzellenanlagen, insbesondere bei einem Einsatz in außenluftunabhängigen Anwendungen, wie z.B. an Bord von Unterwasserschiffen, die Brennstoffzellen oftmals von einem Schutzbehälter umgeben, der mit Stickstoff gefüllt ist, der einen größeren Druck als die Reaktanten in den Brennstoffzellen aufweist. Stickstoff wird auch zum Spülen der Gasräume der Brennstoffzellen, beispielsweise bei einem Abschalten der Brennstoffzellenanlage, verwendet. Somit kann durch geringe Leckagen auch Stickstoff in die Kühlflüssigkeit gelangen.

Aus der WO 2014/029675 A1 ist es bereits bekannt, den Gasgehalt in der Kühlflüssigkeit einer Brennstoffzelle durch eine Messzelle zu überwachen, in die Kühlflüssigkeit gefördert wird und in der dann ein Unterdruck eingestellt wird. Die Kühlflüssigkeit wird dann mit einem wellenförmigen Messsignal bestrahlt und eine Trübung der Kühlflüssigkeit bestimmt, die dann mit einem Schwellwert verglichen wird.

Aus der DE 102 13 076 B4 ist es bekannt, eine Probe einer Flüssigkeit, deren Gasgehalt zu messen ist, in einer Messkammer durch kurzzeitige Druckentlastung zu entspannen. Der sich nach dem Entspannen einstellende Druck und die Probentemperatur werden dann gemessen. Daraus wird nach dem Henry-Gesetz der Gasgehalt berechnet.

Aus der DE 44 00 385 A1 ist es bekannt, den Gasgehalt einer durch eine Leitung fließenden Flüssigkeit kontinuierlich zu messen. Dazu wird die Flüssigkeit vor einer Drosselstelle verdichtet, um alle Gasanteile vollständig zur Lösung zu bringen, und hinter der Drosselstelle entspannt. Durch Messung der Trübung der Flüssigkeit mit Hilfe eines optoelektronischen Sensors vor und hinter der Drosselstelle wird die Gasentlösung detektiert. Anhand der detektierten Gasentlösung wird ein hinter der Drosselstelle liegendes Proportionalventil über einen Regler derart gesteuert, dass der Bestandteil des ungelösten Gases in der Regelstrecke zwischen Drosselstelle und Proportionalventil möglichst klein ist. Bei konstanter Temperatur wird der Druck der Flüssigkeit in der Regelstrecke gemessen und nach dem Henry-Gesetz (oder Henry-Dalton'schen Gesetz) der Gasgehalt der Flüssigkeit berechnet.

Zur Entfernung von gelösten Gasen in Flüssigkeiten können Unterdruck-Entgasungsvorrichtungen (manchmal auch als "Vakuum-Entgaser" bezeichnet) eingesetzt werden. Diese umfassen einen Unterdruck-Entgasungsraum (beispielsweise einen Behälter) und eine Unterdruckerzeugungseinrichtung zur Erzeugung eines Druckes unterhalb eines Betriebsdruckes der zu entgasenden Flüssigkeit, insbesondere eines Vakuums, in dem Unterdruck-Entgasungsraum. Die zu entgasende Flüssigkeit wird in den Unterdruck-Entgasungsraum eingeleitet. Durch den Unterdruck fällt in der Flüssigkeit gelöstes Gas dabei als Blasen aus und wird abgeschieden.

So wird beispielsweise bei der vorstehend erwähnten WO 2014/029675 A1 im Fall, dass bei der Messung Gas festgestellt wird, ein entsprechendes Signal ausgegeben, mit dem ein nachgeschalteter Vakuum-Entgaser eingeschaltet und solange betrieben wird, bis die Flüssigkeit wieder gasfrei ist. Hierdurch wird die Entstehung eines Zwei-Phasen-Gemisches (Gas/Wasser) in der Kühlflüssigkeit vermieden, so dass eine Gasansammlung und damit eine lokale Überhitzung an der Bipolarplatte nicht auftreten kann.

Ausgehend hiervon ist es Aufgabe vorliegender Erfindung, die Überwachung und/oder Ermittlung des Gasgehalts oder des Gas-Sättigungszustandes in Flüssigkeiten weiter zu vereinfachen.

Die Lösung dieser Aufgabe gelingt durch eine Unterdruck-Entgasungsvorrichtung für eine Flüssigkeit gemäß Patentanspruch 1, ein Verfahren zu deren Betrieb gemäß Patentanspruch 7 bzw. 13 sowie eine Verwendung einer derartigen Vorrichtung oder eines derartigen Verfahrens gemäß Patentanspruch 16. Vorteilhafte Ausgestaltungen sind jeweils Gegenstand der Unteransprüche.

Eine erfindungsgemäße Unterdruck-Entgasungsvorrichtung für eine Flüssigkeit umfasst einen Unterdruck-Entgasungsraum, eine Unterdruckerzeugungseinrichtung zur Erzeugung eines Druckes unterhalb eines Betriebsdruckes einer zu entgasenden Flüssigkeit, insbesondere eines Vakuums, in dem Entgasungsraum und einen in dem Unterdruck-Entgasungsraum angeordneten Sensor zur Detektion eines Gasblasenanteils in der zu entgasenden Flüssigkeit.

Die Erfindung beruht auf der Überlegung, dass in einer Unterdruck-Entgasungsvorrichtung bereits ohnehin eine zu entgasende Flüssigkeit entspannt wird und hierdurch gelöstes Gas in Form von kleinen Blasen ausfällt. Dieser Effekt kann nicht nur zur Reduzierung des Gasgehalts genutzt werden, sondern gleichzeitig auch zur Überwachung und/oder Ermittlung des Gasgehalts oder Gas-Sättigungszustandes der Flüssigkeit. Bei bekannter Temperatur kann man mit dem Sensor den Flüssigkeitsstrom in dem Entgasungsraum, insbesondere den eintretenden Flüssigkeitsstrom, beobachten. Da mit dem Zuströmen von Flüssigkeit auch der Druck in dem Entgasungsraum steigt, entsteht zunächst eine große Menge an Gasblasen. Mit steigendem Druck in dem Raum werden die Menge und die Größe der Gasblasen kleiner, bis ein Druck überschritten wird, bei dem keine Blasen mehr entstehen. Dieser Druck hängt über das Henry-Gesetz mit der gelösten Menge an Gas zusammen. Durch Ermittlung und Auswertung des Gasblasenanteils in der zu entgasenden Flüssigkeit, der durch die Blasengröße und -menge bestimmt wird, kann also bei bekannten Temperatur- und Druckverhältnissen über den Zustand, bei dem die Blasen aus der zuströmenden Flüssigkeit nicht mehr austreten (bzw. der Gasblasenanteil einen Schwellwert erreicht und/oder unterschreitet), auf den Gas-Sättigungszustand geschlossen bzw. mit Hilfe des Henry-Gesetzes der Gasgehalt in der Flüssigkeit ermittelt werden.

Hierdurch ergeben sich eine Vielzahl von Möglichkeiten, beispielsweise:
- aus den bei Erreichen des Gas-Sättigungszustands vorliegenden Rahmenbedingungen (z.B. Füllstandshöhe der Flüssigkeit im Entgasungsraum, Druck im Entgasungsraum) kann auf eine unzulässig hohe oder zulässig hohe Gaskonzentration geschlossen werden,
- bei vorgegebenen Rahmenbedingungen (z.B. definierter Druckbereich im Entgasungsraum, definierter Bereich für die Füllstandshöhe im Entgasungsraum) kann auf Erreichen des Gas-Sättigungszustands überwacht und für den Fall, dass kein Gas-Sättigungszustand erreicht wird, auf eine unzulässig hohe Gaskonzentration geschlossen werden,
- der Gasgehalt kann kontinuierlich, zyklisch oder bei Erreichen vordefinierter Rahmenbedingungen (z.B. Erreichen einer vordefinierten Füllstandshöhe der Flüssigkeit in dem Entgasungsraum oder eines vordefinierten Drucks im Entgasungsraum) berechnet und auf Erreichen, Überschreiten und/oder Unterschreiten eines Schwellwertes überwacht werden und daraus auf eine unzulässig hohe bzw. zulässig hohe Gaskonzentration geschlossen werden

Unter dem Begriff "Gasblasenanteil" wird hierbei der Anteil des Volumens der Gasblasen (d.h. von entlöstem Gas) im Verhältnis zu einem definierten Messvolumen verstanden. Der Gasblasenanteil wird durch die Menge an Gasblasen und deren Größe bestimmt. Zur Messung des Gasblasenanteils kann eine Veränderung der Transmission und der Reflektion der Flüssigkeit für Wellen verstanden, die durch eine Veränderung der Zusammensetzung Flüssigkeit/Gas der Flüssigkeit hervorgerufen wird.

Die Erfindung nutzt somit in intelligenter Weise den Entgasungsvorgang in einer Unterdruck-Entgasungsvorrichtung, um durch einen darin integrierten Sensor den Gasgehalt bzw. Gas-Sättigungszustand einer Flüssigkeit zu überwachen und/oder zu ermitteln. Hierdurch ergibt sich ein wesentlich reduzierter Apparate- und Kostenaufwand sowie Platzbedarf im Vergleich zu einer von der Entgasungsvorrichtung getrennten Überwachungs- und/oder Messeinrichtung für den Gasgehalt. Von besonderem Vorteil ist dabei auch, dass alle unterschiedlichen Arten von gelösten Gasen berücksichtigt werden. Ein Gas das bei hoher Konzentration nicht ausperlt, kann in der Kühlflüssigkeit verbleiben, während ein anderes Gas, das bei niedrigerer Konzentration ausperlt, sicher erkannt und entfernt wird. Und es können kommerziell erhältliche Unterdruck-Entgasungsvorrichtungen (z.B. Vakuum-Entgaser) verwendet werden, die lediglich um den Sensor ergänzt werden müssen.

Eine besonders genaue Messung des Gasgehalts ist dabei möglich, wenn der Entgasungsraum einen Behälter mit einer Zufuhrleitung für zu entgasende Flüssigkeit zu dem Behälter umfasst und der Sensor in der Zufuhrleitung angeordnet ist. Da der Durchmesser der Zufuhrleitung üblicherweise kleiner ist als der des Behälters, kommt es dort zu einer besonders starken Entwicklung und guten Verteilung der Gasblasen und die Trübung lässt sich besonders genau ermitteln.

Für eine genaue Berechnung des Gasgehalts mit Hilfe des Henry-Gesetzes muss der Druck der Flüssigkeit bekannt sein. Im einfachsten Fall ist hierzu ein Drucksensor zur Ermittlung des Drucks der Flüssigkeit in dem Entgasungsraum vorhanden. Es kann aber beispielsweise auch ein Sensor zur Ermittlung einer Füllstandshöhe der Flüssigkeit in dem Entgasungsraum vorhanden sein und anhand der Füllstandshöhe auf den Druck geschlossen werden.

Wenn die Vorrichtung zusätzlich noch einen Temperatursensor zur Ermittlung der Temperatur der Flüssigkeit umfasst, dann ist eine Ermittlung des Gas-Sättigungszustandes bzw. des Gasgehalts mit Hilfe des Henry-Gesetzes im gesamten Druck-/Temperaturbereich möglich.

Die Detektion des Gasblasenanteils kann besonders einfach und kostengünstig dadurch erfolgen, dass der Sensor einen Sender zum Bestrahlen der Flüssigkeit mit einem wellenförmigen Signal, insbesondere einem Ultraschallsignal, und einen Detektor zum Messen des wellenförmigen Signals nach dem Kontakt mit der Flüssigkeit umfasst. Es sind grundsätzlich aber auch andere optische oder physikalische Verfahren möglich.

Gemäß einer konstruktiv besonders einfachen und hinsichtlich der Blasenbildung wirkungsvollen Ausgestaltung umfasst die Unterdruckerzeugungseinrichtung zur Erzeugung der Gasblasen eine Druckdrossel, insbesondere eine Düse, und eine Pumpe. Die Druckdrossel ist vorzugsweise in einer Zufuhrleitung für zu entgasende Flüssigkeit angeordnet. Die Pumpe ist vorzugsweise entweder eine Förderpumpe für entgaste Flüssigkeit, die in einer Abfuhrleitung für entgaste Flüssigkeit angeordnet ist, oder eine Unterdruckpumpe (insbesondere Vakuumpumpe), die an den Entgasungsraum angeschlossen ist.

Bei einem ersten erfindungsgemäßen Verfahren zum Betrieb einer vorstehend erläuterten Entgasungsvorrichtung wird in einem ersten Schritt in dem Unterdruck-Entgasungsraum ein Druck unterhalb eines Betriebsdrucks der Flüssigkeit, insbesondere ein Vakuum, erzeugt, und in einem zweiten Schritt wird die zu entgasende Flüssigkeit in den Unterdruck-Entgasungsraum eingeleitet, wobei in der in den Entgasungsraum eingeleiteten Flüssigkeit mit dem Sensor ein Gasblasenanteil detektiert wird.

In dem zweiten Schritt kann dann kontinuierlich, zyklisch oder bei Erreichen eines vorgegebenen oder vorgebbaren Druckes der zu entgasenden Flüssigkeit in dem Entgasungsraum und/oder bei Erreichen einer vorgegebenen oder vorgebbaren Füllstandshöhe in dem Entgasungsraum der Gasblasenanteil mit einem Schwellwert verglichen werden und ein Signal erzeugt werden, wenn der Gasblasenanteil den Schwellwert erreicht, überschreitet (d.h. der Gasgehalt unzulässig hoch ist) und/oder unterschreitet (d.h. der Gasgehalt zulässig hoch ist). Dieses Signal kann dann ausgewertet und zum Beispiel im Falle einer Brennstoffzellenanlage eine Fehlerreaktion (z.B. eine Leistungsreduzierung) eingeleitet werden.

In dem zweiten Schritt kann auch kontinuierlich, zyklisch oder bei Erreichen oder Überschreiten eines vorgegebenen oder vorgebbaren Schwellwertes für den Druck der zu entgasenden Flüssigkeit in dem Entgasungsraum und/oder bei Erreichen oder Überschreiten einer vorgegebenen oder vorgebbaren Füllstandshöhe in dem Entgasungsraum der Gasgehalt in der Flüssigkeit auf der Grundlage des Henry-Gesetzes ermittelt werden. Der so ermittelte Gasgehalt kann dann ausgewertet und wenn unzulässig hoch eine Fehlerreaktion eingeleitet werden.

Wenn zusätzlich noch die Temperatur der Flüssigkeit gemessen wird, kann der Schwellwert für den Druck, die Füllstandshöhe und/oder der Schwellwert für den Gasblasenanteil in Abhängigkeit von der Temperatur vorgegeben werden. Hierdurch ist mit Hilfe des Henry-Gesetzes eine Überwachung und/oder Ermittlung des Gas-Sättigungszustandes bzw. des Gasgehalts im gesamten Druck-/Temperaturbereich möglich.

Von besonderem Vorteil werden bei dem ersten erfindungsgemäßen Verfahren der erste und der zweite Schritt zyklisch wiederholt und somit ein quasi-kontinuierlicher Betrieb durchgeführt.

Bei einem zweiten erfindungsgemäßen Verfahren zum Betrieb einer vorstehend erläuterten Entgasungsvorrichtung wird zu entgasende Flüssigkeit in den Unterdruck-Entgasungsraum eingeleitet, wobei der Druck der zu entgasenden Flüssigkeit in dem Unterdruck-Entgasungsraum auf einen vorgegebenen oder vorgebbaren Wert konstant gehalten wird und wobei in der eingeleiteten Flüssigkeit mit dem Sensor ein Gasblasenanteil detektiert wird. Hierbei wird der Entgasungsvorrichtung somit ein kontinuierlicher Flüssigkeitsvolumenstrom zugeführt.

Der Gasblasenanteil kann dann mit einem Schwellwert verglichen und ein Signal erzeugt werden, wenn der Gasblasenanteil den Schwellwert erreicht, überschreitet und/oder unterschreitet. Dieses Signal kann dann ausgewertet und zum Beispiel im Falle einer Brennstoffzellenanlage eine Fehlerreaktion (z.B. eine Leistungsreduzierung) eingeleitet werden. Da der Druck bekannt ist, kann auf Grundlage des Henry-Gesetzes auch der Gasgehalt ermittelt werden.

Wenn zusätzlich noch die Temperatur der Flüssigkeit gemessen wird, kann der Wert des Druckes in Abhängigkeit von der Temperatur vorgegeben werden. Hierdurch ist eine Überwachung und/oder Ermittlung des Gas-Sättigungszustandes bzw. des Gasgehalts im gesamten Druck-/Temperaturbereich möglich.

Eine besonders vorteilhafte Verwendung der vorstehend erläuterten Vorrichtung oder des vorstehend erläuterten Verfahrens liegt in der Überwachung und/oder Ermittlung des Gas-Sättigungszustandes oder Gasgehalts einer Flüssigkeit in einem Kühl- oder Heizkreislauf, insbesondere einer Kühlflüssigkeit einer elektrochemischen Zelle, wie z.B. einer Brennstoffzelle.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Dabei sind einander entsprechende Teile mit jeweils gleichen Bezugszeichen versehen. Es zeigen:
- FIG 1: eine Brennstoffzellenanlage mit einer erfindungsgemäßen Unterdruck-Entgasungsvorrichtung,
- FIG 2: eine Detaildarstellung der Unterdruck-Entgasungsvorrichtung von FIG 1 und
- FIG 3: eine Detaildarstellung des Ultraschall-Sensors von FIG 2.

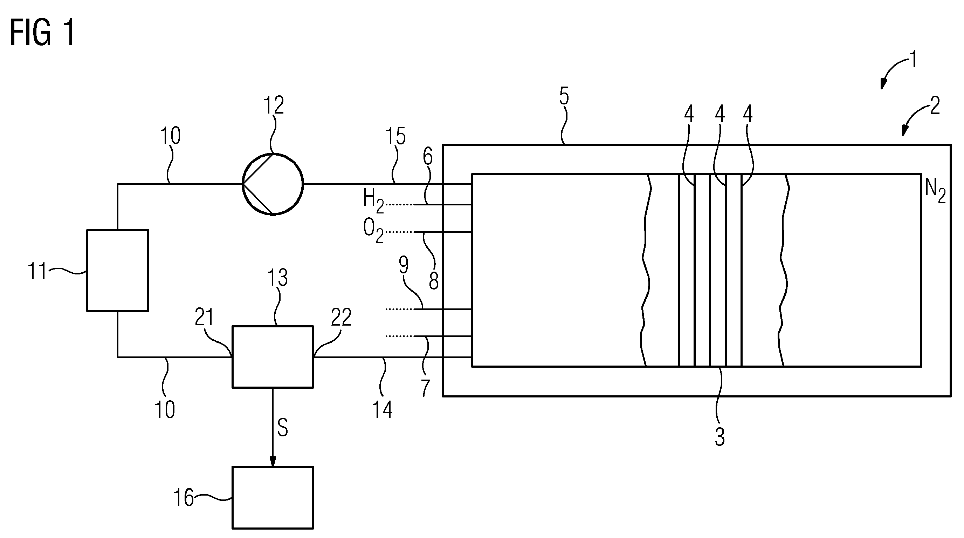

FIG 1 zeigt in vereinfachter Darstellung eine Brennstoffzellenanlage 1, die ein Brennstoffzellenmodul 2 umfasst, das einen Stapel 3 von Brennstoffzellen 4 aufweist, der von einem Schutzgehäuse 5 umgeben ist, das mit Stickstoff N2 als Schutzgas gefüllt ist. Die Brennstoffzellen 4 des Brennstoffzellenstapels 3 sind mit gasförmigem Sauerstoff 02 und Wasserstoff H2 als Reaktanten betreibbar. Eine Wasserstoffzufuhrleitung 6 dient zur Zufuhr von Wasserstoff H2 zu dem Brennstoffzellenstapel 3 und eine Wasserstoffabfuhrleitung 7 dient zur Abfuhr von (Rest-)Wasserstoff aus dem Brennstoffzellenstapel 3. In entsprechender Weise dient eine Sauerstoffzufuhrleitung 8 zur Zufuhr von Sauerstoff 02 zu dem Brennstoffzellenstapel 3 und eine (Rest-) Sauerstoff-Abfuhrleitung 9 zur Abfuhr von Sauerstoff aus dem Brennstoffzellenstapel 3. Der über die Abfuhrleitungen 7, 9 abgeführte (Rest-) Sauerstoff und (Rest-) Wasserstoff kann dann entweder ganz aus der Brennstoffzellenanlage 1 abgeführt werden oder in einem Zirkulationsbetrieb den Brennstoffzellen 4 über die Zufuhrleitungen 6, 8 wieder zugeführt werden.

Stickstoff N2 kann auch zum Spülen der Gasräume der Brennstoffzellen 3 zum Einsatz kommen, beispielsweise bei einem Abschalten der Brennstoffzellenanlage 1.

Der Brennstoffzellenstapel 3 wird über einen Kühlflüssigkeitskreislauf 10 gekühlt. Die Kühlflüssigkeit wird hierzu durch nicht näher dargestellte Bipolarplatten der Brennstoffzellen 4 geführt. Als Kühlflüssigkeit kommt vorzugsweise deionisiertes Wasser zum Einsatz. Der Kühlflüssigkeitskreislauf 10 umfasst beispielsweise einen Speicher 11 für die Kühlflüssigkeit, eine Förderpumpe 12 für die Kühlflüssigkeit, eine Unterdruck-Entgasungsvorrichtung 13, eine Zufuhrleitung 14 zur Zufuhr von Kühlflüssigkeit zu dem Brennstoffzellenstapel 3 und eine Abfuhrleitung 15 zur Abfuhr von Kühlflüssigkeit aus dem Brennstoffzellenstapel 3.

Eine Steuerung 16 dient zur Steuerung des Betriebs der Brennstoffzellenanlage 1.

Die Brennstoffzellenanlage 1 wird folglich mit den drei Betriebsgasen Wasserstoff H2, Sauerstoff 02 und Stickstoff N2 betrieben. Somit können durch geringe Leckagen Wasserstoff, Sauerstoff und/oder Stickstoff in die Kühlflüssigkeit gelangen.

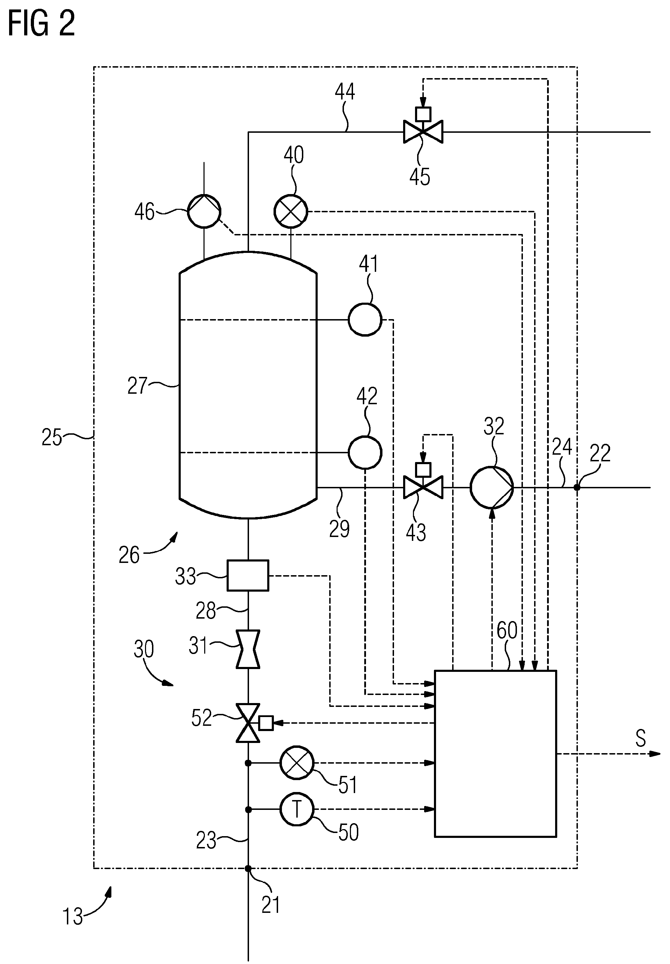

Die Unterdruck-Entgasungsvorrichtung 13 dient zur Ermittlung und Reduzierung des Gasgehalts der Kühlflüssigkeit und ist in genaueren Details in FIG 2 dargestellt.

Die Unterdruck-Entgasungsvorrichtung 13 ist mit ihren Anschlüssen 21, 22 an den Kühlkreislauf 10 so angeschlossen, dass sich ein Zulauf 23 an der Hochdruckseite und ein Rücklauf 24 an der Niederdruckseite des Kühlkreislaufes 10 befinden.

Die Unterdruck-Entgasungsvorrichtung 13 umfasst, von einem gemeinsamen Gehäuse 25 umgeben, einen Unterdruck-Entgasungsraum 26, der wiederum einen Behälter 27, eine Zufuhrleitung 28 für zu entgasende Flüssigkeit, eine Abfuhrleitung 29 für entgaste Flüssigkeit und eine Abfuhrleitung (Entlüftungsleitung) 44 für entlöstes Gas umfasst.

Eine Unterdruckerzeugungseinrichtung 30 dient zur Erzeugung eines Druckes unterhalb eines Betriebsdruckes der zu entgasenden Kühlflüssigkeit (d.h. unterhalb des Drucks der Kühlflüssigkeit in dem Kreislauf 10, insbesondere eines Vakuums, in dem Entgasungsraum 26) und somit zur Erzeugung von Gasblasen in der zu entgasenden Flüssigkeit.

Die Unterdruckerzeugungseinrichtung 30 umfasst hierzu eine am Eingang der Zufuhrleitung 28 angeordnete Düse 31 und eine am Ausgang der Abfuhrleitung 29 angeordnete regelbare Förderpumpe 32 für die Flüssigkeit. In Strömungsrichtung der Kühlflüssigkeit durch die Entgasungsvorrichtung 13 ist die Düse 31 somit vor dem Entgasungsraum 26 und die Pumpe 32 ist nach dem Entgasungsraum 26 angeordnet. Für einen zyklischen Betrieb kann zusätzlich noch eine Unterdruckpumpe (Vakuumpumpe) 46 über ein nicht näher dargestelltes Ventil an den Entgasungsraum angeschlossen sein.

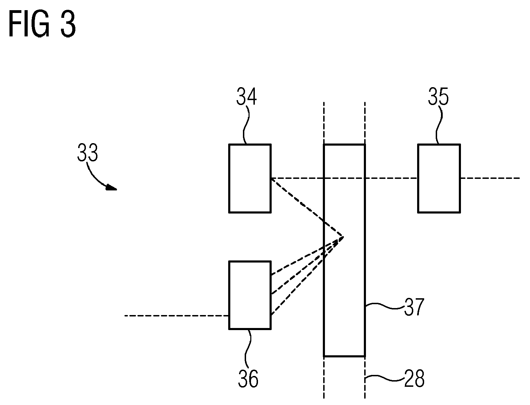

Ein in der Zufuhrleitung 28 angeordneter Sensor 33 dient zur Detektion eines Gasblasenanteils in der zu entgasenden Kühlflüssigkeit. Der Sensor 33 umfasst - wie vereinfacht in FIG 3 dargestellt - einen Sender 34 zum Bestrahlen der Flüssigkeit mit einem Ultraschallsignal, einen Detektor 35 zum Messen des Ultraschallsignals nach dem Kontakt mit der Flüssigkeit sowie eine für das Ultraschallsignal durchlässige Messzelle 37. Der Detektor 35 ist dabei für eine Messung des durch die Kühlflüssigkeit in der Messzelle 37 transmittierten Ultraschallsignals vorgesehen und ist dabei derart angeordnet, dass die Messzelle 37 sich zwischen ihm und dem Sender 34 befindet. Alternativ oder ergänzend kann ein zweiter Detektor 36 vorhanden sein, der an der gleichen Seite der Messzelle 37 wie der Sender 34 angeordnet ist und das von der Kühlflüssigkeit reflektierte Ultraschallsignal misst.

Weiterhin umfasst die Entgasungsvorrichtung 13 einen am Behälter 27 angeordneten Drucksensor 40 zur Ermittlung des Drucks der Flüssigkeit in dem Behälter 27 sowie einen oberen Niveaugeber 41 und einen unteren Niveaugeber 42 zur Ermittlung einer oberen bzw. unteren Füllstandshöhe der Kühlflüssigkeit in dem Behälter 27. In die Abfuhrleitung 29 ist ein steuerbares Ventil 43 und in die an den Behälter 27 angeschlossene Entlüftungsleitung 44 zur Abfuhr entlösten Gases ist ein steuerbares Ventil 45 geschaltet. In den Zulauf 23 ist ein Temperatursensor 50 zur Ermittlung der Temperatur der Flüssigkeit, ein Drucksensor 51 zur Messung des Betriebsdrucks der Kühlflüssigkeit im Zulauf 23 zu der Entgasungsvorrichtung 13 sowie ein steuerbares Ventil 52 geschaltet.

Eine Steuer- und Auswerteeinrichtung 60 erfasst über Signalleitungen die von den Sensoren bzw. Detektoren 35, 36, 40, 41, 42, 50, 51 erzeugten Messsignale und steuert über Steuerleitungen die steuerbaren Ventile 43, 45, 52, die Pumpe 32 und den Sender 34.

Im Folgenden werden nun zwei mögliche Betriebsverfahren für die Entgasungsvorrichtung 13 erläutert:

### a)Zyklischer Betrieb:

Für den Betrieb der Unterdruck-Entgasungsvorrichtung 13 wird diese zunächst durch eine geeignete Füll- und Entlüftungsprozedur in einen betriebsbereiten Zustand gebracht, in dem sich keine oder nur wenig Flüssigkeit in dem Behälter 27 befindet.

Bei dem zyklischen Betriebsverfahren wird - gesteuert von der Steuer- und Auswerteeinrichtung 60 - zyklisch in einem ersten Schritt in dem Unterdruck-Entgasungsraum 26 mit der Pumpe 46 ein Druck unterhalb eines Betriebsdrucks der Flüssigkeit in dem Kreislauf 10, insbesondere ein Vakuum, erzeugt. Die Ventile 43, 45 und 52 sind hierbei geschlossen.

In einem zweiten Schritt wird dann das Ventil 52 geöffnet und durch den Unterdruck im Entgasungsraum 26 dann Flüssigkeit von dem Zulauf 23 über die Düse 31 und die Zufuhrleitung 28 in den Behälter 27 gesaugt. Durch den Sensor 33 wird in der durch die Zufuhrleitung 28 einströmenden Flüssigkeit ein Gasblasenanteil detektiert. Dabei wird mit dem Drucksensor 40 der Druck im Behälter 27 gemessen und mit den Sensoren 50, 51 die Temperatur bzw. Druck der Flüssigkeit im Zulauf 23 gemessen. Außerdem wird mit Hilfe der Sensoren 41, 42 der Füllstand im Behälter 27 gemessen.

Von der Steuer- und Auswerteeinrichtung 60 kann dann kontinuierlich, zyklisch oder bei Erreichen eines vorgegebenen oder vorgebbaren Druckes im Behälter der zu entgasenden Flüssigkeit in dem Entgasungsraum und/oder bei Erreichen der durch den Füllstandsgeber 41 signalisierten Füllstandshöhe in dem Behälter 27 der Gasblasenanteil mit einem Schwellwert verglichen werden und eine Signal S erzeugt werden, wenn der Gasblasenanteil den Schwellwert erreicht oder überschreitet (d.h. der Gasgehalt unzulässig hoch ist) und/oder unterschreitet (d.h. der Gasgehalt zulässig hoch ist). Dieses Signal kann dann an die Anlagensteuerung 16 ausgegeben und von dieser eine Fehlerreaktion der Brennstoffzellenanlage (z.B. eine Leistungsreduzierung) eingeleitet werden.

Das entlöste Gas sammelt sich im oberen Bereich des Behälter 27 und kann durch Öffnen des Ventils 45 über die Entlüftungsleistung 44 abgelassen werden.

In dem zweiten Schritt kann auch kontinuierlich, zyklisch oder bei Erreichen oder Überschreiten eines vorgegebenen oder vorgebbaren Schwellwertes für den Druck im Behälter 27 und/ oder bei Erreichen oder Überschreiten der durch den Füllstandsgeber 41 signalisierten Füllstandshöhe durch die Steuer- und Auswerteeinrichtung 60 der Gasgehalt in der Flüssigkeit auf der Grundlage des Henry-Gesetzes ermittelt (d.h. berechnet) werden. Der so ermittelte Gasgehalt kann dann ausgewertet und wenn unzulässig hoch durch Erzeugen eines Signals S für die Anlagensteuerung 16 eine Fehlerreaktion eingeleitet werden.

Da durch den Sensor 50 die Temperatur der Flüssigkeit gemessen wird, kann der Schwellwert für den Druck und/oder der Schwellwert für den Gasblasenanteil in Abhängigkeit von der Temperatur vorgegeben werden. Hierdurch ist mit Hilfe des Henry-Gesetzes eine Überwachung und/oder Ermittlung des Gas-Sättigungszustandes bzw. des Gasgehalts im gesamten Druck-/Temperaturbereich möglich.

In einem dritten Schritt kann anschließend bei geöffneten Ventilen 45 und 43 sowie geschlossenem Ventil 52 mittels der Pumpe 32 der Flüssigkeitszustand im Behälter 27 wieder auf den Ausgangszustand gebracht werden, in dem sich keine oder nur wenig Flüssigkeit in dem Behälter 27 befindet.

Der erste, der zweite und der dritte Schritt können zyklisch wiederholt und somit ein quasi-kontinuierlicher Betrieb durchgeführt werden.

### b) Kontinuierlicher Betrieb:

Für den Betrieb der Unterdruck-Entgasungsvorrichtung 13 wird diese zunächst durch eine geeignete Füll- und Entlüftungsprozedur in einen betriebsbereiten Zustand gebracht.

Während des Betriebs saugt die Pumpe 32 bei geöffneten Ventilen 52, 43 und geschlossenem Ventil 45 die Flüssigkeit aus dem Behälter 27 und erzeugt in diesem somit einen Unterdruck. Die Düse 31 und die Pumpe 32 sind hierzu entsprechend dimensioniert.

Durch den Unterdruck wird die Flüssigkeit aus dem Zulauf 23, durch das Ventil 52 und die Düse 31 gesaugt und entgast am Ausgang der Düse 31 bzw. am Eingang der Zufuhrleitung 28 entsprechend den physikalischen Gesetzen (Henry-Gesetz, Dalton-Gesetz).

Mit dem Sensor 33 wird ein Gasblasenanteil in der Flüssigkeit gemessen. Der Gasblasenanteil wird durch die Menge und Größe der Gasblasen bestimmt.

Die Gasblasenentwicklung und -große ist neben dem Sättigungszustand der Flüssigkeit von der Druckdifferenz zwischen Zulauf 23 und Inneren des Behälters 27, der Temperatur der Flüssigkeit im Zulauf 23, dem Druck im Behälter 27 und dem Durchmesser der Düse 31 abhängig. Diese sind für eine besonders wirkungsvolle Gasblasenentwicklung aufeinander abgestimmt.

Bei diesem kontinuierlichen Betriebsverfahren zum Betrieb der Entgasungsvorrichtung 13 wird - gesteuert von der Steuer- und Auswerteeinrichtung 60 - der Druck der zu entgasenden Flüssigkeit in dem Behälter 27 durch entsprechende Ansteuerung der Pumpe 32 und/oder des Ventils 52 auf einen vorgegebenen oder vorgebbaren Wert konstant gehalten und dabei durch den Sensor 33 in der durch die Zufuhrleitung 28 einströmenden Flüssigkeit ein Gasblasenanteildetektiert. Hierbei wird der Entgasungsvorrichtung 13 ein kontinuierlicher Flüssigkeitsvolumenstrom aus dem Kühlkreislauf 10 zugeführt.

Der Gasblasenanteil wird dann von der Steuer- und Auswerteeinrichtung 60 mit einem Schwellwert verglichen und von dieser ein Signal S erzeugt und an die übergeordnete Anlagensteuerung 16 ausgegeben, wenn der Gasblasenanteil den Schwellwert erreicht, überschreitet und/oder unterschreitet. Dieses Signal kann dann von der übergeordnete Anlagensteuerung 16 ausgewertet und eine Fehlerreaktion (z.B. eine Leistungsreduzierung) eingeleitet werden. Da zusätzlich mit dem Sensor 50 noch die Temperatur der Flüssigkeit gemessen wird, kann der Wert des Druckes, auf den in dem Behälter 27 geregelt wird, in Abhängigkeit von der Temperatur vorgegeben werden. Alternativ ist auch eine exakte Berechnung des Gasgehalts im gesamten Temperaturbereich möglich.

Es wird somit ein kontinuierlicher Flüssigkeitsvolumenstrom der Entgasungsvorrichtung 13 zugeführt und dem Kühlkreislauf 10 ab- bzw. zugeführt. Es kommt dadurch zu keinen oder nur minimalen Druckschwankungen in dem Kühlkreislauf 10.

Eine Erhöhung der Genauigkeit bei der Ermittlung des Gasgehalts ist noch dadurch möglich, dass unterschiedliche Druckniveaus in dem Behälter 27 durchfahren werden. Der kontinuierliche Betrieb wird durch die regelbare Pumpe 32 und/oder durch ein Schließen des Ventils 52 derart geregelt, dass sich das Flüssigkeitsniveau im Behälter 27 zwischen dem oberen Niveaugeber 41 und dem unteren Niveaugeber bewegt. Durch die unterschiedlichen Druckniveaus und die davon abhängige Gasblasenentwicklung kann der Gasgehalt bzw. Gas-Sättigungszustand der Flüssigkeit besonders genau bestimmt werden.

Die hier beschriebenen Verfahren kommen somit zur Gasgehalts-Überwachung oder -ermittlung ohne weiteres zusätzliches Messgerät aus. Es wird lediglich der bei der Entgasung ohnehin entstehende Blasenstrom beobachtet und beispielsweise aus einer einfachen Temperatur- und Druckmessung der Gasgehalt oder Gas-Sättigungszustand ermittelt.

Für ein noch effektiveres Austreiben der Gasblasen aus der Flüssigkeit kann die Düse 31 zusätzlich beheizt werden oder die Flüssigkeit noch zusätzlich mit Ultraschall entgast werden.

Das in den FIG 1 bis 3 dargestellte Prinzip kann ebenso auf Kühlkreisläufe anderer technischer Geräte übertragen werden, bei denen zuverlässige Kühlleitungen benötigt werden. Außerdem kann es auf viele andere Flüssigkeitskreisläufe wie z.B. Heizkreisläufe (z.B. Zentralheizungen) übertragen werden.

## Patentansprüche

1. Unterdruck-Entgasungsvorrichtung (13) für eine Flüssigkeit, mit
- einem Unterdruck-Entgasungsraum (26),
- einer Unterdruckerzeugungseinrichtung (30) zur Erzeugung eines Druckes unterhalb eines Betriebsdruckes einer zu entgasenden Flüssigkeit, insbesondere eines Vakuums, in dem Entgasungsraum (26),
**gekennzeichnet durch**
- einen in dem Unterdruck-Entgasungsraum (26) angeordneten Sensor (33) zur Detektion eines Gasblasenanteils in der zu entgasenden Flüssigkeit.

2. Vorrichtung (13) nach Anspruch 1, **dadurch gekennzeichnet, dass** der Entgasungsraum (26) einen Behälter (27) mit einer Zufuhrleitung (28) für zu entgasende Flüssigkeit zu dem Behälter (27) umfasst und dass der Sensor (33) in der Zufuhrleitung angeordnet ist.

3. Vorrichtung (13) nach Anspruch 1 oder 2, **gekennzeichnet durch** einen Drucksensor (40) zur Ermittlung eines Drucks in dem Entgasungsraum (26) und/oder einen Sensor (41, 42) zur Ermittlung einer Füllstandshöhe der Flüssigkeit in dem Entgasungsraum (26).

4. Vorrichtung (13) nach einem der vorhergehenden Ansprüche, **gekennzeichnet durch** einen Temperatursensor (50) zur Ermittlung einer Temperatur der Flüssigkeit.

5. Vorrichtung (13) nach einem der vorhergehenden Ansprüche, **dadurch gekennzeichnet, dass** der Sensor (33) einen Sender (34) zum Bestrahlen der Flüssigkeit mit einem wellenförmigen Signal, insbesondere einem Ultraschallsignal, und einen Detektor (35, 36) zum Messen des wellenförmigen Signals nach dem Kontakt mit der Flüssigkeit umfasst.

6. Vorrichtung (13) nach einem der vorhergehenden Ansprüche, **dadurch gekennzeichnet, dass** die Unterdruckerzeugungseinrichtung (30) zur Erzeugung der Gasblasen eine Druckdrossel, insbesondere eine Düse (31), und eine Pumpe (32) umfasst..

7. Verfahren zum Betrieb einer Entgasungsvorrichtung (13) nach einem der vorhergehenden Ansprüche, **dadurch gekennzeichnet, dass**
- in einem ersten Schritt in dem Unterdruck-Entgasungsraum (26) ein Druck unterhalb eines Betriebsdrucks der Flüssigkeit, insbesondere ein Vakuum, erzeugt wird,
- in einem zweiten Schritt die zu entgasende Flüssigkeit in den Unterdruck-Entgasungsraum (26) eingeleitet wird, wobei in der in den Entgasungsraum (26) eingeleiteten Flüssigkeit mit dem Sensor (33) ein Gasblasenanteil detektiert wird.

8. Verfahren nach Anspruch 7, **dadurch gekennzeichnet, dass** in dem zweiten Schritt kontinuierlich, zyklisch oder bei Erreichen eines vorgegebenen oder vorgebbaren Druckes der zu entgasenden Flüssigkeit in dem Entgasungsraum (26) und/oder bei Erreichen einer vorgegebenen oder vorgebbaren Füllstandshöhe in dem Entgasungsraum (26) der Gasblasenanteil mit einem Schwellwert verglichen wird und ein Signal erzeugt wird, wenn der Gasblasenanteil den Schwellwert erreicht, überschreitet und/oder unterschreitet.

9. Verfahren nach einem der Ansprüche 7 oder 8, **dadurch gekennzeichnet, dass** in dem zweiten Schritt kontinuierlich, zyklisch oder bei Erreichen oder Überschreiten eines vorgegebenen oder vorgebbaren Schwellwertes für den Druck der zu entgasenden Flüssigkeit in dem Entgasungsraum (26) und/oder bei Erreichen oder Überschreiten einer vorgegebenen oder vorgebbaren Füllstandshöhe in dem Entgasungsraum (26) der Gasgehalt in der Flüssigkeit auf der Grundlage des Henry-Gesetzes ermittelt wird.

10. Verfahren nach einem der Ansprüche 7 bis 9, **dadurch gekennzeichnet, dass** die Temperatur der Flüssigkeit gemessen wird und der Schwellwert für den Druck, die Füllstandshöhe und/oder der Schwellwert für den Gasblasenanteil in Abhängigkeit von der Temperatur vorgegeben wird.

11. Verfahren nach einem der Ansprüche 7 bis 10, **dadurch gekennzeichnet, dass** die Temperatur der Flüssigkeit gemessen wird und der Schwellwert in Abhängigkeit von der Temperatur vorgegeben bzw. der Gasgehalt in Abhängigkeit von der Temperatur ermittelt wird.

12. Verfahren nach einem der Ansprüche 7 bis 11, **dadurch gekennzeichnet, dass** der erste und der zweite Schritt zyklisch wiederholt werden kann.

13. Verfahren zum Betrieb einer Entgasungsvorrichtung (13) nach einem der Ansprüche 1 bis 6, **dadurch gekennzeichnet, dass** zu entgasende Flüssigkeit in den Unterdruck-Entgasungsraum (26) eingeleitet wird, wobei der Druck der zu entgasenden Flüssigkeit in dem Unterdruck-Entgasungsraum (26) auf einen vorgegebenen oder vorgebbaren Wert konstant gehalten wird und wobei in der in den Entgasungsraum (26) eingeleiteten Flüssigkeit mit dem Sensor (33) ein Gasblasenanteil detektiert wird.

14. Verfahren nach Anspruch 13, **dadurch gekennzeichnet, dass** der Gasblasenanteil mit einem Schwellwert verglichen wird und ein Signal erzeugt wird, wenn der Gasblasenanteil den Schwellwert erreicht, überschreitet und/oder unterschreitet.

15. Verfahren nach einem der Ansprüche 13 bis 14, **dadurch gekennzeichnet, dass** die Temperatur der Flüssigkeit gemessen wird und der Wert des Druckes in Abhängigkeit von der Temperatur vorgegeben wird.

16. Verwendung der Vorrichtung oder des Verfahrens nach einem der vorhergehenden Ansprüche zur Überwachung und/oder Ermittlung des Gas-Sättigungszustandes oder des Gasgehalts einer Flüssigkeit in einem Kühl- oder Heizkreislauf (10), insbesondere einer Kühlflüssigkeit einer elektrochemischen Zelle wie einer Brennstoffzelle (4).
